# EUROPEAN PATENT SPECIFICATION

(11) **EP 3 827 669 B1**
(45) Date of publication and mention of the grant of the patent: **25.03.2026**
(21) Application number: 19211523.6
(22) Date of filing: 26.11.2019
(51) Int. Cl.: A23L 2/38

(54) **A METHOD FOR PRODUCING PLANT MILK**
VERFAHREN ZUR HERSTELLUNG VON PFLANZLICHER MILCH
PROCÉDÉ DE PRODUCTION DE LAIT VÉGÉTAL

(43) Date of publication of application: 02.06.2021
(73) Proprietor: Tetra Laval Holdings & Finance S.A., 1009 Pully (CH)
(72) Inventor: SVENSSON, Birgitta, SE-261 93 Saxtorp (SE)
(74) Representative: Tetra Pak Patent Attorneys

(56) References cited:
- EP-A1- 1 174 042
- EP-A1- 3 818 836
- WO-A1-2006/131116
- WO-A1-2016/172570
- US-A- 4 259 358
- US-B1- 10 143 226

## Description

### Technical Field

The invention relates to a method for producing plant milk.

### Background Art

Plant-based beverages known as plant milk have become increasingly popular over the last years. The plant milk is vegan, healthy, and environmental-friendly. US4259358 discloses for example a process for preparing a food product containing readily-assimilable nutrients in the form of protein and low molecular weight carbohydrates.

Production of the plant milk comprises breaking starch, originating from plant material typically in form of grain, into simple sugar molecules which determines the product's sweetness. The breaking of the starch is done by mixing the plant material with water and various enzymes. The enzymatic process resulting from this typically takes place in large tanks. However, the sweetness of the obtained products may vary due to the time it takes to empty the tank such that the final products obtained last may be much sweeter than the final products obtained first i.e. the sweetness of the products obtained from the same tank may vary.

Therefore there is a need to provide a method to, at least partly, address the abovementioned challenges.

### Summary

It is an object of the invention to at least partly overcome one or more of the above-identified limitations of the prior art. In particular, it is an object to provide a method for producing plant milk while providing an improved control of the sweetness of the final products.

According to an aspect of the invention there is provided a method for producing plant milk, the method comprising providing plant material, mixing the plant material with water and a first enzyme to form a first mixture where the first enzyme hydrolyzes starch originating from the plant material by breaking up the starch into dextrins, separating fibers originating from the plant material from the first mixture to obtain a fiber fraction and a plant milk base that comprises dextrins, mixing the plant milk base and a second enzyme to form a second mixture where the second enzyme hydrolyzes the dextrins in the plant milk base by breaking up the dextrins into sugars, and heating the second mixture to reduce microorganisms in the second mixture, such that the second mixture thereby forms the plant milk.

The step of providing the plant material may include grinding plant materials, e.g. if it is desired to have the plant materials in the form of flour. For instance, the plant milk may be an oat beverage and the plant material may be de-hulled oat kernels. In this case, the step of providing the oat grains may further include grinding the de-hulled oat kernels. The step of mixing the plant material with water and the first enzyme allows for hydrolysis of starch originating from the plant material by breaking up the starch into dextrins. The step of separating the fibers originating from the plant material from the first mixture allows for separating the fiber fraction in the form of a fiber fraction. The fiber fraction is comprised by fibers that have not solved into the mixture. The step of mixing the plant milk base and the second enzyme to form the second mixture allows for hydrolyzing dextrins in the plant milk base by breaking up the dextrins into simple sugars which define the sweetness of the plant milk. The step of mixing the plant milk base and the second enzyme provides an improved control on the sweetness of the plant milk. This because the breaking up of the dextrins into simple sugars is completely or at least mainly performed in the step of mixing the plant milk base and the second enzyme.

In addition, the step of mixing the plant milk base and the second enzyme may be done in small batches. The small batches may provide an improved flexibility to choose various types of the second enzyme that may provide different sugar molecules for different batches. The plant milk base may be cooled subsequent to the step of mixing the plant milk base and the second enzyme. Thereby, the small batches may further improve the control on the sweetness of the plant milk by e.g. allowing a faster cooling of the second mixture and hence slowing down the enzyme activity. The faster cooling of the small batches may in turn provide an improved control on the sweetness of the plant milk e.g. by avoiding the plant milk becoming too sweet.

The step of heating the second mixture allows for inactivating the enzymes remained in the second mixture and also reducing microorganisms in the second mixture. The step of heating the second mixture results in that plant milk suitable for transportation, storage and subsequent consumption is formed. Some examples of the heating are ultra-high temperature (UHT) treatment and ultra-pasteurization processes.

According to the abovementioned aspect of the present invention, the respective mixing of the plant material and the plant milk base with the first and the second enzymes are performed in two different steps that are separated from each other, both in time and in space. In addition, the step of separating fibers originating from the plant material from the first mixture is performed in between the two mixing steps. This provides for improved flexibility and control of the plant milk production as well as of the sweetness of the plant milk.

By "plant milk" is hereby meant a nondairy beverage made from a plant or plants. Examples of plant milks are almond, soy, and oat milks.

By "starch originating from the plant material" is hereby meant amylum which is a polymeric carbohydrate consisting of glucose units joined by glycosidic bonds. The starch may be found in plant material such as grains, nuts and seeds. The starch is an important source of energy and provides important nutrients such as B-vitamins, iron, and calcium.

By "dextrins" is hereby meant a group of low-molecular weight carbohydrates produced by the hydrolysis of starch originating from the plant material.

By "sugars" is hereby meant simple carbohydrates obtained from hydrolysis of dextrins of the starch originating from the plant material. Examples of sugars obtained from hydrolysis of dextrins of the starch originating from the plant material are maltodextrin, various glucose syrups, and dextrose.

By "enzymes" is hereby meant macromolecular biological catalysts that accelerate chemical reactions such as hydrolysis of the starch originating from the plant material. Examples of the enzymes are α-amylase, β-amylase, and amyloglucosidase.

The separated fibers typically comprise insoluble fibers. By "insoluble fibers" is hereby meant a portion of the plant material that cannot dissolve in the first mixture, alternatively or additionally it is also meant that it cannot be completely broken down by human digestive enzymes.

The method may further comprise adding at least one of salt, vegetable oil, calcium, vitamins, a stabilizer and a flavor to the second mixture. Thereby, various types of the plant milk i.e. plant milk with various tastes and/or various nutritious content may be formed. Examples of the salt and the vegetable oils are calcium salt, sunflower oil, and rapeseed oils.

The fiber fraction may comprise less than 70 wt% water. That is, the separation of fibers is performed such that the fiber fraction may comprise less than 70 wt% water. Conventional techniques, such as decanters, can be used and operated to obtain such fiber fraction with less than said wt% water. Preferably the fiber fraction may comprise less than 60 wt% water. The fiber fraction may be a highly viscous liquid such that it may hold its shape for a while.

The fibers in the fiber fraction may have an average length of 0.8 to 3 mm. This length may be obtained by e.g. selecting a plant material that provides such length of the fibers. Additionally or alternatively, the fiber length may be obtained by setting suitable control parameters for the separation, as is conventionally done for capturing fibers of a certain length. Thereby the step of separating fibers originating from the plant material may be performed so as to separate fibers with an average length of 0.8 to 3 mm or larger from the first mixture to obtain a fiber fraction. Consequently, the step of separating fibers originating from the plant material may not separate fibers with lengths smaller than 0.8 mm from the first mixture. Thereby, the obtained plant milk base may comprise fibers with lengths smaller than 0.8 mm which is generally desired.

The fiber fraction may comprise at least 95% of the fibers that are present in the first mixture. The plant milk base may comprise less than 5 wt% of the fibers. The plant milk may preferably comprise less than 2% of the fibers.

The separating of the fibers from the first mixture may be performed by means of a decanter. Thereby the decanter may separate the fibers using a high-speed centrifugal force.

The method may further comprise, prior to the separating of the fibers from the first mixture, feeding the first mixture through a holding tube for increasing a time during which the hydrolyzation of starch originating from the plant material occurs. The step of feeding the first mixture through the holding tube may allow for providing time for allowing the first enzyme to hydrolyze the starch by breaking up the starch into dextrins. Thereby, the step of feeding the first mixture through the holding tube may provide an improved control of the formation of the plant milk. The step of feeding the first mixture through the holding tube may be performed at a lower temperature than the step of mixing the plant material with water and the first enzyme.

The first enzyme may be α-amylase. Thereby, the α-amylase may hydrolyze starch originating from the plant material by breaking up the starch into dextrins. The first enzyme may in addition or alternatively be another amylase or pullulanse.

The second enzyme may be amyloglucosidase. Thereby, the amyloglucosidase may hydrolyze dextrins in the plant milk base by breaking up the dextrins into sugars which define the sweetness of the plant milk. The second enzyme may alternatively be β-amylase or any other saccharification enzyme.

The method may further comprise storing a portion of the plant milk base in a tank, mixing a portion of the plant milk base and a third enzyme to form a third mixture where the third enzyme hydrolyzes dextrins in the portion of the plant milk base by breaking up the dextrins into sugars, wherein the third enzyme is of a type that is different from that of the second enzyme, and heating the third mixture to reduce microorganisms in the third mixture, such that the third mixture thereby forms a type of plant milk that is different from the plant milk formed by the second mixture. Thereby, various types of the plant milk may be formed using the same plant milk base. This may in turn provide an improved flexibility by e.g. choosing various types of enzymes and flavors. This may also allow formation of various types of the plant milk in a reduced time and hence at a reduced cost.

The third enzyme may be β-amylase in the case where the second enzyme is not β-amylase. Then the β-amylase may hydrolyze dextrins in the portion of the plant milk base by breaking up the dextrins into sugars which define the sweetness of the plant milk. In the case that the second enzyme is β-amylase, the third enzyme is not β-amylase but a different enzyme such as amyloglucosidase. The third enzyme may alternatively be another saccharification enzyme.

No or so small amounts of amyloglucosidase and β-amylase may be introduced in the first mixture, such that no or less than 5 % of dextrins in the first mixture is be broken up into sugars. This may in turn provide an improved control of the sweetness of the plant milk. This is since no or only small amount the dextrins in the first mixture then break up into sugars i.e. during the steps of mixing the plant material with water and the first enzyme. Thereby, 100% or at least 95% of the dextrins of the first mixture remains in the plant milk base may, to be broken up into sugars in the step of mixing the plant milk base and the second enzyme.

In addition, protease could be added at the same time or after the adding of the second enzyme, or the third or fourth enzyme in case one of these is used. The protease is an enzyme that catalyzes the breakdown of proteins into smaller polypeptides or single amino acids.

The mixing of the plant milk base and the second enzyme to form the second mixture may be performed at a temperature within the range of 40 to 60°C, and for a period of time within the range of 15 to 30 min. The temperature range of 40 to 60°C and the time range of 15 to 30 min may efficiently facilitate hydrolysis of the dextrins in the plant milk base when breaking up the dextrins into sugars.

As an example, there is provided a system for producing plant milk, the system comprising a plant material supply for providing plant material, a first mixer for mixing the plant material with water and a first enzyme to form a first mixture where the first enzyme hydrolyzes starch originating from the plant material by breaking up the starch from the plant material by breaking up the starch into dextrins, a separator for separating fibers originating from the plant material from the first mixture to obtain a fiber fraction and a plant milk base that comprises dextrins. The system further comprises a second mixer for mixing the plant milk base and a second enzyme to form a second mixture where the second enzyme hydrolyzes the dextrins in the plant milk base by breaking up the dextrins into sugars. The system further comprises a heater for heating the second mixture to reduce microorganisms in the second mixture, such that the second mixture thereby forms the plant milk, wherein the separator is arranged downstream the first mixer, is arranged upstream the second mixer, comprises a fiber outlet that diverts fibers, and comprises plant milk base outlet that directs plant milk base to the second mixer. The system may further comprise a holding tube arranged downstream the first mixture and upstream the separator to increase a time during which the hydrolyzation of starch originating from the plant material occurs. The system may further comprise a buffer tank arranged downstream the second mixture and upstream the heater. The system may further comprise a homogenizer arranged downstream the heater and a packaging unit arranged downstream the homogenizer. The system may comprise the same features as the method and provides corresponding advantages.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is an schematic illustration of a system for producing plant milks.
Fig. 2 is a block scheme of a method for producing plant milks.

### Detailed Description

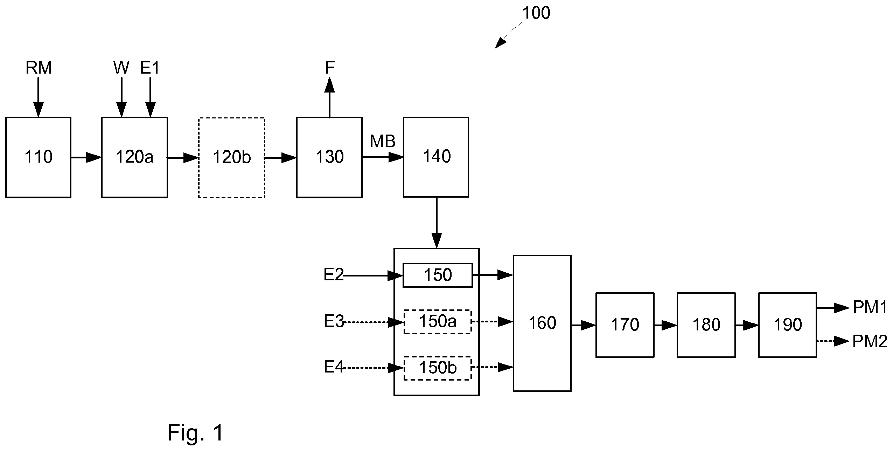

With reference to Fig. 1 a system 100 is illustrated. The system 100 is used to produce plant milks PM1. In the following the plant milk PM1, the plant material (plant raw material) RM and the system 100 in relation to producing plant milk PM1 will be described.

The plant milk PM1 is a vegan beverage made from a plant material RM. The plant milk PM1 may have a creamy mouthfeel. The plant milk PM1 may have various tastes and flavors.

The plant material RM are an edible group of plant seeds and/or fruits that may produce the plant milk PM1. The plant material RM may e.g. be grains, cereals, seeds, or nuts. The plant material RM may be any other plants' fruits. Some examples of the seed and grains are barley, wheat, rye, corn, rice, and oat. The plant material RM is an important source of energy. The plant material RM typically comprises carbohydrates, fat, protein, vitamins, minerals and any other substances naturally occurring in the plant material RM. The plant material RM may have the form of powder or flour. The plant material RM may, for example, be supplied in large bags.

In connection with Fig. 1, a system 100 is illustrated. The system comprises a plant material supply 110 for providing the plant material RM. The plant material supply 110 may comprise a bag emptying system to empty bags containing the plant material RM. The plant material supply 110 may further comprise a grinder e.g. in the case that the plant material RM is in the form of grains or seeds. The grinder may then grind the seeds and grains to make the plant material RM finer, for example in the form of a powder i.e. flour. The grinding may be performed in a manner which per se is known in the art. For instance, the grinding may be performed by a conventional and commercially available grinder. The plant material supply 110 may comprise a storage. The storage may keep the plant material RM at a desired temperature and a desired humidity. The storage may preserve the nourishment of the plant material supply 110.

The system 100 further comprises a first mixer 120a. The first mixer 120a is arranged downstream the plant material supply 110. The plant material RM is fed from the plant material supply 110 into the first mixer 120a. The first mixer 120a comprises two more inlets for providing water W and a first enzyme E1 into the first mixer 120a. The first mixer 120a mixes the plant material RM with water W and the first enzyme E1. BY this mixing the first mixer 120a forms a first mixture from the plant material RM, the water W and the first enzyme E1. The first mixture may have the form of a slurry. The first enzyme E1 may be α-amylase. The first enzyme E1 hydrolyzes starch originating from the plant material RM. In detail, the first enzyme E1 breaks up the starch into dextrins. The mixing of the plant material RM, water W and the first enzyme E1 may be performed at a temperature range of 60 to 95 °C. The mixing of the plant material RM, water W and the first enzyme E1 may be performed for a period of time within a range of 1 to 15 min.

The system may further comprise a holding tube 120b. The holding tube 120b typically has the form of a tube that has a length through which it takes a pre-defined time to pass for the first mixture that passes the holding tube 120b. The holding tube 120b is be arranged downstream the first mixer 120a. There may be a valve between the first mixer 120a and the holding tube 120b to regulate the flow of the first mixture from the mixer 120a. If used, the holding tube 120b increases a time during which the hydrolyzation of starch originating from the plant material RM occurs. In other words, the holding tube 120b serves the purpose of maintaining the first mixture for a longer time and at a certain temperature. A temperature of the mixture passing through the holding tube 120b may be in a range of 60 to 90°C. A time during which the first mixture passes through the holding tube 120b may be in a range of 1 to 5 min. Additional enzyme may be added to the first mixture in the holding tube 120b. The additional enzyme may enhance hydrolysis of the starch by breaking up the starch into dextrins. In case no holding tube 120b is used, the first mixture may directly flow into a separator 130. It should be noted that no or so small amounts of amyloglucosidase and β-amylase may be introduced in the first mixture such that no or less than 5 % of dextrins in the first mixture may be broken up into sugars. This assists in providing improved control on the sweetness of the plant milk PM1.

The system 100 further comprises a separator 130. The separator 130 is arranged downstream the first mixer 120a. The separator is arranged upstream a second mixer 150. The separator 130 separates fibers originating from the plant material RM from the first mixture to obtain a fiber fraction F and a plant milk base MB. The separating 240 of the fibers from the first mixture may be performed in a manner which per se is known in the art. The separating of the fibers from the first mixture may be performed by means of a decanter, i.e. the separator 130 may be a decanter. The decanter may separate fibers from the first mixture by using a high-speed centrifugal force. The decanter may separate solid fibers from the first mixture. The fiber fraction F may look like a viscous liquid which may hold its shape for a while. The fiber fraction F may comprise at least 95% of the fibers that are present in the first mixture. The fiber fraction F may comprise less than less than 70 wt% water. The fibers in the fiber fraction may have an average length of 0.8 to 3 mm. The separator 130 comprises a fiber outlet that diverts the fiber fraction F, which includes fibers. The separator 130 has an outlet for a plant milk base MB, which is the part of the first mixture that remains after the fiber fraction F has been removed. The plant milk base MB has a liquid form. The plant milk base MB typically has a lighter color than the first mixture due to a lower fiber content. The plant milk base MB may comprise less than 5 wt% of the fibers that previously were part of the first mixture. The separator 130, or decanter, may be operated in a conventional manner to obtain a plant milk base MB that has less than 5 wt% of the fibers. The plant milk base MB typically comprises dextrins. The separator 130 comprises and a plant milk base outlet that directs plant milk base MB to the second mixer 150.

The system 100 may further comprise a tank 140 that is arranged downstream the plant milk base outlet of the separator 130 and upstream the second mixer 150. A portion of or all of the plant milk base MB may be stored in the tank 140 for a period of time. The tank 140 may have a volume in a range of 3000 to 10 000 liter. A temperature of the milk base MB stored in the tank 140 may be in a range of 40 to 60°C.

The system 100 comprises a second mixer 150. The second mixer 150 is arranged downstream the separator 130. In case the tank 140 is included in the system 100 then the second mixer 150 is arranged downstream the tank 140. The second mixer 150 comprises an inlet for providing a second enzyme E2 into the mixer 150, such that the second enzyme E2 can be mixed with milk base MB that is transferred to the second mixer 150. The second mixer 150 is arranged to mix the plant milk base MB and the second enzyme E2 to form a second mixture. The second enzyme E2 may be amyloglucosidase. The second enzyme E2 hydrolyzes dextrins in the plant milk base MB by breaking up the dextrins into sugars. When mixing the plant milk base MB and the second enzyme E2 the temperature of the second mixture may be kept in the range of 40 to 60°C. The mixing of the plant milk base MB and the second enzyme E2 may be performed for a period of time within a range of 15 to 30 min. At least one of salt, vegetable oil, calcium, vitamins, a stabilizer and a flavor may be added to the second mixture, to be mixed into and thus form part of the second mixture. Such extra ingredients may provide various tastes and flavors to the second mixture as well as different nutritious content. Some examples of flavors are vanilla, chocolate, strawberry and raspberry. The second mixer 150 may have a volume in a range of 200 to 10 000 liter.

The system 100 may comprise a plurality of second mixers 150. Fig.1 shows that the system 100 comprises three second mixers 150, 150a, and 150b. However, the system 100 may comprise any number of second mixers 150. The plurality of the second mixers 150 may all be arranged downstream the tank 140. The plurality of the second mixers 150 may all be arranged upstream a heater 170. In other words, the plurality of the second mixers 150 may be arranged in parallel. The second mixer 150a may mix a portion of the plant milk base MB and a third enzyme E3 to form a third mixture. The third enzyme E3 may hydrolyzes dextrins in the portion of the plant milk base MB by breaking up the dextrins into sugars. The third enzyme E3 may be of a type that is different from the second enzyme E2. The third enzyme E3 may be β-amylase. The second mixer 150b may respectively mix another portion of the plant milk base MB and a fourth enzyme E4 to form a fourth mixture. It should be noted that at least two of the parallel second mixtures may alternatively mix a portion of the plant milk base MB and the same enzyme e.g. E3 or E4 but with different flavors. Using different mixers makes it possible to produce different mixtures, such as the second, the third and the fourth mixtures. Such different mixtures can then be used to produce different plant milk products.

It is also possible to produce different plant milk products by using one mixer 150 only. Typically, the mixer 150 is then cleaned in between the production of the different plant milk products. The difference in production lies in adding different enzymes and/or different ingredients to the milk base MN that is received from the separator 130, alternatively received from the tank 140 in case a tank 140 is used.

The system 100 may comprise a cooler (not shown) arranged downstream the second mixers 150. The cooler may be a conventional and commercially available cooler. The cooler may reduce the temperature of the second mixture to a temperature range of <10 °C. The system 100 may additionally comprise a buffer tank 160 arranged downstream the cooler.

The system 100 further comprises a heater 170 arranged downstream the buffer tank 160. The heater 170 heats the second mixture to eliminate or at least reduce microorganisms in the second mixture. The second mixture, subsequent to the heating by the heater 170, forms a plant milk PM1. The heater 170 may provide UHT treatment, ultra-pasteurization or pasteurization. For instance, the heater 170 may perform UHT treatment using a direct or an indirect heating system. In the case of the direct UHT heating, the heater 170 may inject steam into the second mixture. In the case of the indirect UHT heating, the heater 170 may heat the second mixture in an indirect manner. In other words, in the case of the indirect UHT heating, the second mixture may not come into direct contact with the heat source but may instead be heated by a heat exchanger. In this case, the heat exchanger 170 may e.g. be a tubular heat exchanger. The heater 170 may heat the second mixture to a temperature within the range of 135 to 150 °C. The heating may be performed for a period of time that is within the range of 4 to 30 s. The heating is done for all mixtures that is accomplished by the second mixing unit 150. The different mixtures form, when heated by the heater 170, different types of plant milk PM1, PM2.

The system 100 may comprise a homogenizer 180. The homogenizer may be arranged downstream the heater 170 to improve a homogeneity of the plant milk PM1.

The system 100 may further comprise a packaging unit 190 arranged downstream the heater 170, and, if there is a homogenizer, downstream the homogenizer 180. The packaging unit 190 is conventional packaging machine and is arranged to produce packages into which the plant milk PM1 is aseptically packaged. In this case, the plant milk PM1 is shelf stable for over 6 months. The packaging unit 190 may be a non-aseptic packaging unit. In this case, the plant milk may be kept refrigerated.

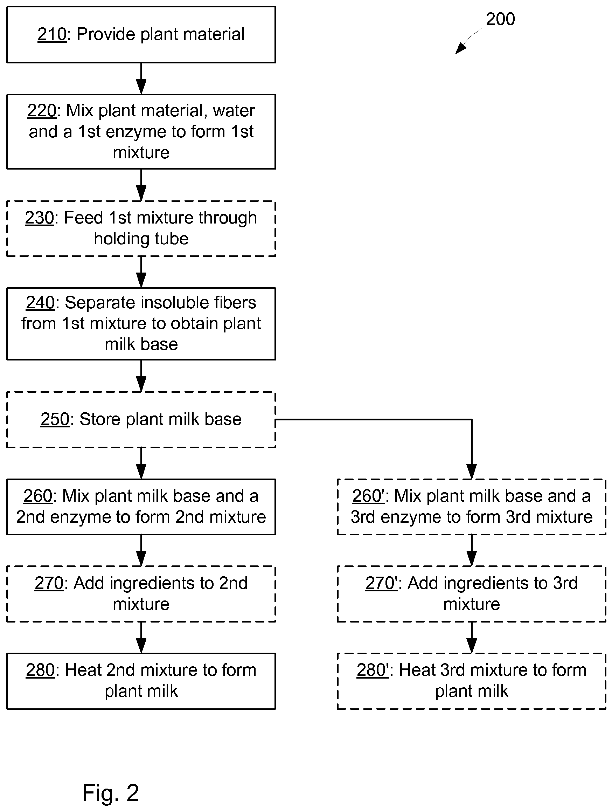

Fig. 2 illustrates a block scheme of a method 200 for producing plant milks. The method 200 comprises the steps described below.

The method 200 comprises providing 210 plant material RM. The step of providing 210 the plant material is performed using the plant material supply 110, as described above. The step of providing 210 the plant material RM may be performed as described above.

The method 200 comprises mixing 220 the plant material RM with water W and a first enzyme E1 to form a first mixture, as described above. The step of mixing 220 the plant material RM with water W and the first enzyme E1 is performed using a first mixer 120a, as described above.

The method 200 may comprise feeding 230 the first mixture through a holding tube 120b for increasing a time during which the hydrolyzation of starch originating from the plant material RM occurs, as described above.

The method 200 comprises separating 240 fibers originating from the plant material RM from the first mixture to obtain a fiber fraction F and a plant milk base MB that comprises dextrins, as described above. The step of separating 240 fibers originating from the plant material RM from the first mixture is performed using a separator 130, as described above.

The method 200 may comprise storing 250 a portion of the plant milk base MB in a tank 140, as described above.

The method 200 further comprises mixing 260 the plant milk base MB and a second enzyme E2 to form a second mixture. The second enzyme E2 hydrolyzes dextrins in the plant milk base MB by breaking up the dextrins into sugars. The step of mixing 260 the plant milk base MB and the second enzyme E2 is performed as described above. The step of mixing 260 the plant milk base MB and the second enzyme E2 is performed using a second mixer 150, as described above.

The method 200 may further comprise adding 270 at least one of salt, vegetable oil, calcium, vitamins, a stabilizer and a flavor to the second mixture, as described above.

The method 200 further comprises heating 280 the second mixture to reduce microorganisms in the second mixture, such that the second mixture thereby forms the plant milk PM1, as described above. The step of heating 280 the second mixture to reduce microorganisms in the second mixture is performed using a heater 170, as described above.

The optional step of feeding 230 the first mixture through the holding tube 120b is performed prior to the step of separating 240 the fibers from the first mixture. The step of separating 240 fibers from the first mixture to obtain the fiber fraction F and the plant milk base MB is performed in between the step of mixing 220 the plant material RM with water W and a first enzyme E1 to form a first mixture and the step of mixing 260 the plant milk base MB and a second enzyme E2 to form a second mixture. Other steps of the method may be performed in any order suitable.

The method 200 may comprises mixing 260' the plant milk base MB and a third enzyme E3 to form a third mixture that is different from the second mixture. The second enzyme E2 hydrolyzes dextrins in the plant milk base MB by breaking up the dextrins into sugars. The step of mixing 260' the plant milk base MB and the third enzyme E3 is performed as described above. The step of mixing 260' the plant milk base MB and the third enzyme E3 is performed using the second mixer 150, typically after cleaning the second mixer 150, or is performed by using a another mixer 150a, 150b, as described above. The method 200 may further comprise adding 270' at least one of salt, vegetable oil, calcium, vitamins, a stabilizer and a flavor to the third mixture, as described above. The method 200 may comprise heating 280' the third mixture to reduce microorganisms in the third mixture, such that the third mixture thereby forms plant milk PM2 that is different from the plant milk PM1 that was obtained from the second mixture, as described above. The step of heating 280' the second mixture to reduce microorganisms in the second mixture is performed using the same heater 170 as was used for producing the plant milk PM1 from the second mixture, as described above.

From the description above follows that, although various embodiments of the invention have been described and shown, the invention is not restricted thereto, but may also be embodied in other ways within the scope of the subject-matter defined in the following claims.

## Claims

1. A method (200) for producing plant milk (PM1), the method comprising:
providing (210) plant material (RM),
mixing (220) the plant material (RM) with water (W) and a first enzyme (E1) to form a first mixture where the first enzyme (E1) hydrolyzes starch originating from the plant material (RM) by breaking up the starch into dextrins,
separating (240) fibers originating from the plant material (RM) from the first mixture to obtain a fiber fraction (F) and a plant milk base (MB) that comprises dextrins,
mixing (260) the plant milk base (MB) and a second enzyme (E2) to form a second mixture where the second enzyme (E2) hydrolyzes the dextrins in the plant milk base (MB) by breaking up the dextrins into sugars, and
heating (280) the second mixture to reduce microorganisms in the second mixture, such that the second mixture thereby forms the plant milk (PM1).

2. The method according to claim 1, further comprising adding (270) at least one of salt, vegetable oil, calcium, vitamins, a stabilizer and a flavor to the second mixture.

3. The method (200) according to any preceding claim, wherein the fiber fraction (F) comprises less than 70 wt% water.

4. The method (200) according to any preceding claim, wherein the fibers in the fiber fraction (F) have an average length of 0.8 to 3 mm.

5. The method (200) according to any preceding claim, wherein the fiber fraction (F) comprises at least 95% of the fibers that are present in the first mixture.

6. The method (200) according to any preceding claim, wherein the plant milk base (MB) comprises less than 5 wt% of the fibers.

7. The method (200) according to any preceding claim, wherein the separating (240) of the fibers from the first mixture is performed by means of a decanter (130).

8. The method (200) according to any preceding claim, further comprising, prior to the separating (240) of the fibers from the first mixture, feeding (230) the first mixture through a holding tube (120b) for increasing a time during which the hydrolyzation of starch originating from the plant material (RM) occurs.

9. The method (200) according to any preceding claim, wherein the first enzyme (E1) is α-amylase.

10. The method (200) according to any preceding claim, wherein the second enzyme (E2) is amyloglucosidase.

11. The method (200) according to any preceding claim, further comprising:
storing (250) a portion of the plant milk base (MB) in a tank (140),
mixing (260') a portion of the plant milk base (MB) and a third enzyme (E3) to form a third mixture where the third enzyme (E3) hydrolyzes dextrins in the portion of the plant milk base (MB) by breaking up the dextrins into sugars, wherein the third enzyme (E3) is of a type that is different from the second enzyme (E2), and
heating (280') the third mixture to reduce microorganisms in the third mixture, such that the third mixture thereby forms a type of plant milk (PM2) that is different from the plant milk (PM1) formed by the second mixture.

12. The method (200) according to claim 11, wherein the third enzyme (E3) is β-amylase.

13. The method (200) according to any preceding claim, wherein no or so small amounts of amyloglucosidase, β-amylase or similar enzymes are introduced in the first mixture, such that no or less than 5 % of dextrins in the first mixture are broken up into sugars.

14. The method (200) according to any preceding claim, wherein the mixing (260) of the plant milk base (MB) and the second enzyme (E2) to form the second mixture is performed
at a temperature within the range of 40 to 60°C, and
for a period of time within the range of 15 to 30 min.

## Patentansprüche

1. Verfahren (200) zum Herstellen von Pflanzenmilch (PM1), wobei das Verfahren Folgendes umfasst:
Bereitstellen (210) von Pflanzenmaterial (RM),
Mischen (220) des Pflanzenmaterials (RM) mit Wasser (W) und einem ersten Enzym (E1) unter Bildung eines ersten Gemischs, worin das erste Enzym (E1) aus dem Pflanzenmaterial (RM) stammende Stärke durch Aufbrechen der Stärke in Dextrine hydrolysiert,
Trennen (240) von aus dem Pflanzenmaterial (RM) stammenden Fasern von dem ersten Gemisch unter Erhalt einer Faserfraktion (F) und einer Pflanzenmilchbasis (MB), die Dextrine umfasst,
Mischen (260) der Pflanzenmilchbasis (MB) und eines zweiten Enzyms (E2) unter Bildung eines zweiten Gemischs, worin das zweite Enzym (E2) die Dextrine in der Pflanzenmilchbasis (MB) durch Aufbrechen der Dextrine in Zucker hydrolysiert, und
Erwärmen (280) des zweiten Gemischs zur Reduzierung von Mikroorganismen im zweiten Gemisch, so dass das zweite Gemisch dadurch die Pflanzenmilch (PM1) bildet.

2. Verfahren nach Anspruch 1, ferner umfassend Hinzufügen (270) von mindestens einem von Salz, Pflanzenöl, Calcium, Vitaminen, einem Stabilisator und einem Geschmacksstoff zum zweiten Gemisch.

3. Verfahren (200) nach einem vorhergehenden Anspruch, wobei die Faserfraktion (F) weniger als 70 Gew.-% Wasser umfasst.

4. Verfahren (200) nach einem vorhergehenden Anspruch, wobei die Fasern in der Faserfraktion (F) eine mittlere Länge von 0,8 bis 3 mm aufweisen.

5. Verfahren (200) nach einem vorhergehenden Anspruch, wobei die Faserfraktion (F) mindestens 95 % der Fasern umfasst, die im ersten Gemisch vorhanden sind.

6. Verfahren (200) nach einem vorhergehenden Anspruch, wobei die Pflanzenmilchbasis (MB) weniger als 5 Gew.-% der Fasern umfasst.

7. Verfahren (200) nach einem vorhergehenden Anspruch, wobei das Trennen (240) der Fasern vom ersten Gemisch mit einem Dekanter (130) ausgeführt wird.

8. Verfahren (200) nach einem vorhergehenden Anspruch, ferner umfassend vor dem Trennen (240) der Fasern vom ersten Gemisch Zuführen (230) des ersten Gemischs durch ein Halterohr (120b) zur Verlängerung einer Zeit, während der die Hydrolyse von aus dem Pflanzenmaterial (RM) stammender Stärke stattfindet.

9. Verfahren (200) nach einem vorhergehenden Anspruch, wobei es sich bei dem ersten Enzym (E1) um α-Amylase handelt.

10. Verfahren (200) nach einem vorhergehenden Anspruch, wobei es sich bei dem zweiten Enzym (E2) um Amyloglucosidase handelt.

11. Verfahren (200) nach einem vorhergehenden Anspruch, ferner umfassend:
Lagern (250) eines Teils der Pflanzenmilchbasis (MB) in einem Tank (140),
Mischen (260') eines Teils der Pflanzenmilchbasis (MB) und eines dritten Enzyms (E3) unter Bildung eines dritten Gemischs, worin das dritte Enzym (E3) Dextrine in dem Teil der Pflanzenmilchbase (MB) durch Aufbrechen der Dextrine in Zucker hydrolysiert, wobei es sich bei dem dritten Enzym (E3) um einen Typ handelt, der sich von dem zweiten Enzym (E2) unterscheidet, und
Erwärmen (280') des dritten Gemischs zur Reduzierung von Mikroorganismen im dritten Gemisch, so dass das dritte Gemisch dadurch einen Pflanzenmilchtyp (PM2) bildet, der sich von der vom zweiten Gemisch gebildeten Pflanzenmilch (PM1) unterscheidet.

12. Verfahren (200) nach Anspruch 11, wobei es sich bei dem dritten Enzym (E3) um β-Amylase handelt.

13. Verfahren (200) nach einem vorhergehenden Anspruch, wobei keine oder so geringe Mengen an Amyloglucosidase, β-Amylase oder ähnlichen Enzymen in das erste Gemisch eingeführt werden, so dass keine oder weniger als 5 % Dextrine im ersten Gemisch in Zucker aufgebrochen werden.

14. Verfahren (200) nach einem vorhergehenden Anspruch, wobei das Mischen (260) der Pflanzenmilchbasis (MB) und des zweiten Enzyms (E2) zur Bildung des zweiten Gemischs bei einer Temperatur im Bereich von 40 bis 60 °C und
über einen Zeitraum im Bereich von 15 bis 30 min ausgeführt wird.

## Revendications

1. Procédé (200) de production de lait végétal (PM1), le procédé comprenant :
fourniture (210) d'une matière végétale (RM),
mélange (220) de la matière végétale (RM) avec de l'eau (W) et une première enzyme (E1) pour former un premier mélange où la première enzyme (E1) hydrolyse l'amidon provenant de la matière végétale (RM) en rompant l'amidon en dextrines,
séparation (240) des fibres provenant de la matière végétale (RM) du premier mélange pour obtenir une fraction de fibres (F) et une base de lait végétal (MB) qui comprend des dextrines,
mélange (260) de la base de lait végétal (MB) et d'une deuxième enzyme (E2) pour former un deuxième mélange où la deuxième enzyme (E2) hydrolyse les dextrines dans la base de lait végétal (MB) en rompant les dextrines en sucres, et
chauffage (280) du deuxième mélange pour réduire des micro-organismes dans le deuxième mélange, de sorte que le deuxième mélange forme ainsi le lait végétal (PM1).

2. Procédé selon la revendication 1, comprenant en outre l'ajout (270) d'au moins l'un parmi un sel, une huile végétale, du calcium, des vitamines, un stabilisant et un arôme au deuxième mélange.

3. Procédé (200) selon l'une quelconque des revendications précédentes, dans lequel la fraction de fibres (F) comprend moins de 70 % en poids d'eau.

4. Procédé (200) selon l'une quelconque des revendications précédentes, dans lequel les fibres dans la fraction de fibres (F) ont une longueur moyenne de 0,8 à 3 mm.

5. Procédé (200) selon l'une quelconque des revendications précédentes, dans lequel la fraction de fibres (F) comprend au moins 95 % des fibres qui sont présentes dans le premier mélange.

6. Procédé (200) selon l'une quelconque des revendications précédentes, dans lequel la base de lait végétal (MB) comprend moins de 5 % en poids des fibres.

7. Procédé (200) selon l'une quelconque des revendications précédentes, dans lequel la séparation (240) des fibres du premier mélange est effectuée au moyen d'un décanteur (130).

8. Procédé (200) selon l'une quelconque des revendications précédentes, comprenant en outre, avant la séparation (240) des fibres du premier mélange, l'alimentation (230) du premier mélange à travers un tube de maintien (120b) pour augmenter un temps pendant lequel l'hydrolyse de l'amidon provenant de la matière végétale (RM) se produit.

9. Procédé (200) selon l'une quelconque des revendications précédentes, dans lequel la première enzyme (F1) est l'α-amylase.

10. Procédé (200) selon l'une quelconque des revendications précédentes, dans lequel la deuxième enzyme (E2) est l'amyloglucosidase.

11. Procédé (200) selon l'une quelconque des revendications précédentes, comprenant en outre :
stockage (250) d'une partie de la base de lait végétal (MB) dans un réservoir (140),
mélange (260') d'une partie de la base de lait végétal (MB) et d'une troisième enzyme (E3) pour former un troisième mélange où la troisième enzyme (E3) hydrolyse des dextrines dans la partie de la base de lait végétal (MB) en rompant les dextrines en sucres, dans lequel la troisième enzyme (E3) est d'un type différent de la deuxième enzyme (E2), et
chauffage (280') du troisième mélange pour réduire les micro-organismes dans le troisième mélange, de sorte que le troisième mélange forme ainsi un type de lait végétal (PM2) qui est différent du lait végétal (PM1) formé par le deuxième mélange.

12. Procédé (200) selon la revendication 11, dans lequel la troisième enzyme (E3) est la β-amylase.

13. Procédé (200) selon l'une quelconque des revendications précédentes, dans lequel aucune ou de petites quantités d'amyloglucosidase, de β-amylase ou d'enzymes similaires (n')est introduite/(ne) sont introduites dans le premier mélange, de sorte qu'aucune ou moins de 5 % de dextrines dans le premier mélange (ne) sont rompues en sucres.

14. Procédé (200) selon l'une quelconque des revendications précédentes, dans lequel le mélange (260) de la base de lait végétal (MB) et de la deuxième enzyme (E2) pour former le deuxième mélange est effectué
à une température dans la plage de 40 à 60 °C, et pendant une durée dans la plage de 15 à 30 min.
